# FASCICULE DE BREVET EUROPEEN

(11) **EP 4 237 289 B1**
(45) Date de publication et mention de la délivrance du brevet: **17.06.2026**
(21) Numéro de dépôt: 21785909.9
(22) Date de dépôt: 05.10.2021
(51) Int. Cl.: B60R 16/02

(54) **ASSEMBLAGE D'UNE GOULOTTE A UN ELEMENT STRUCTUREL D'UN VEHICULE AUTOMOBILE**
ANORDNUNG EINES KANALS AN EINEM STRUKTURELEMENT EINES KRAFTFAHRZEUGS
ASSEMBLY OF A DUCT TO A STRUCTURAL ELEMENT OF A MOTOR VEHICLE

(30) Priorité: 02.11.2020 FR 2011197
(43) Date de publication de la demande: 06.09.2023
(73) Titulaire: Renault s.a.s, 92100 Boulogne Billancourt (FR)
(72) Inventeur: BIGOT, Anthony, 78084 Guyancourt Cedex (FR); DUPARC, Cédric, 76410 Cleon (FR); OUATIK, Ali, 78084 Guyancourt Cedex (FR)
(86) Numéro de dépôt international: PCT/EP2021/077343
(87) Numéro de publication internationale: WO 2022/089882

(56) Documents cités:
- FR-A1- 2 968 472
- FR-A1- 3 094 330
- US-A- 3 347 392
- US-A- 5 668 351
- US-A1- 2004 026 577
- US-A1- 2013 075 152

## Description

L'invention a pour objet un assemblage d'une goulotte à un élément structurel d'un véhicule automobile.

Dans certains véhicules, une goulotte de passage de câble(s) est fixée à un élément structurel du véhicule, par exemple une traverse telle que la traverse supportant la colonne de direction. A cet effet, la goulotte peut comporter un ou plusieurs rails, souvent deux, à l'intérieur desquels sont introduits des pattes solidaires de la traverse suivant une direction d'insertion. Un doigt solidaire d'une surface interne du rail vient s'emboîter dans un orifice de la patte empêchant tout mouvement de la goulotte dans une direction inverse à la direction d'insertion. Cette fixation est simple et facile à réaliser. Il arrive cependant que lors du montage, une surface externe des rails de la goulotte vienne glisser sur la patte à insérer dans le rail. La goulotte se retrouve alors dans une mauvaise position dans laquelle les pattes s'étendent le long des rails à l'extérieur de ceux-ci, sans coopération, de sorte que la goulotte n'est pas fixée à l'élément de structure. Cette mauvaise position peut être difficile à identifier quand les rails sont situés sous la goulotte, et donc difficilement visibles, car la goulotte est alors supportée bien que non fixée. En outre, lorsque ces rails sont situés sous la goulotte lors du montage, il peut être malaisé d'introduire les éléments de guidage à l'intérieur des rails.

L'invention vise à pallier tout ou partie des inconvénients précités.

A cet effet, il est proposé un assemblage d'un élément structurel d'un véhicule et d'une goulotte selon la revendication 1.

L'extrémité élargie du rail de guidage présente ainsi une forme similaire à un avaloir qui facilite l'insertion d'un élément de guidage à l'intérieur des rails et par conséquent le montage de la goulotte par rapport à un élément structurel portant cet élément de guidage.

Avantageusement, au niveau de l'extrémité élargie du rail de guidage, les deux parois de guidage peuvent s'écarter l'une de l'autre, ce qui peut davantage faciliter le montage, notamment en aveugle, de la goulotte.

Quelque soit le mode de réalisation, au niveau de l'extrémité élargie du rail de guidage, la partie d'extrémité de l'au moins une paroi de guidage peut être plane ou incurvée. Avantageusement, une partie incurvée pourra présenter une convexité dirigée vers l'autre paroi de guidage pour faciliter le guidage d'un élément de guidage vers l'intérieur du rail.

Avantageusement, l'une des parois de guidage peut former une paroi de la goulotte, ce qui peut simplifier la réalisation de la goulotte.

Avantageusement, au moins une des parois de guidage peut être pourvue, dans une partie distincte d'une partie d'extrémité, d'un élément d'emboîtement choisi parmi un orifice et un doigt saillant en direction de l'autre paroi de guidage. L'orifice, ou le doigt, peut permettre un maintien d'un élément de guidage inséré à l'intérieur du rail par emboîtement, cet élément de guidage inséré présentant un élément d'emboîtement coopérant avec celui du rail, à savoir respectivement un doigt ou un orifice.

Avantageusement, la direction de guidage peut être une direction transverse à la direction longitudinale de la goulotte, notamment une direction perpendiculaire ou sensiblement perpendiculaire à cette direction longitudinale. Ceci peut faciliter le positionnement de la goulotte le long d'un élément structurel

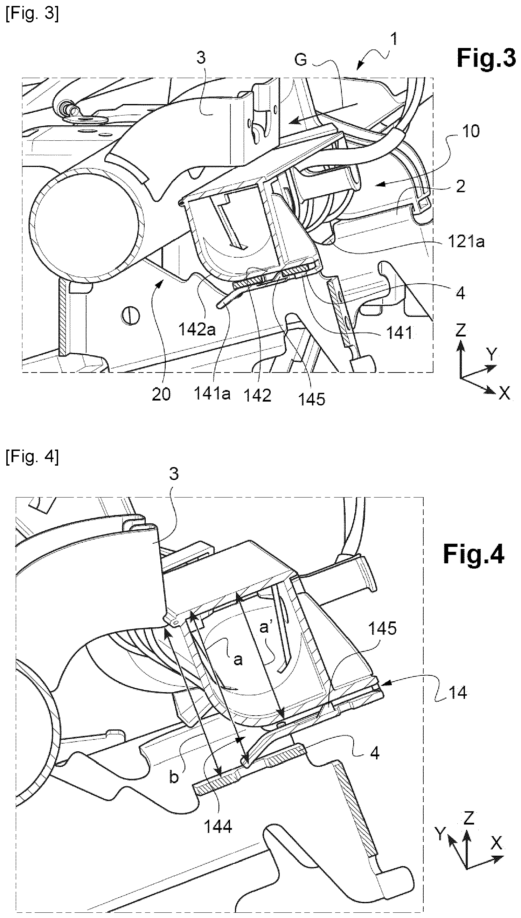

Notamment, en position montée, la goulotte passe (s'étend) entre l'élément de guidage et l'organe dans cette direction perpendiculaire aux parois de guidage. On notera en outre, que dans cette position montée, la dimension de la goulotte de sa paroi supérieure de guidage (solidaire de la goulotte) à sa paroi opposée (notée « a' » sur la figure 4), est inférieure à la distance séparant l'élément de guidage dudit organe dans la direction perpendiculaire aux parois de guidage.

Ainsi, lors du montage de la goulotte sur l'élément structurel, il est impossible de mal positionner la goulotte avec un élément de guidage situé à l'extérieur du rail de la goulotte du fait de la différence des dimensions. En effet, en cas de mauvais positionnement, la goulotte vient buter contre l'organe et ne peut être positionné contre l'élément structurel. Notamment, l'extrémité élargie du rail de guidage peut être positionnée d'un côté situé en regard de l'élément structurel et l'élément de guidage de celui-ci peut être inséré à l'intérieur du rail de guidage par son extrémité élargie.

Avantageusement, un élément d'emboîtement de l'élément de guidage peut coopérer avec un élément d'emboîtement du rail de guidage recevant l'élément de guidage, ces éléments d'emboîtement étant situés à distance de l'extrémité élargie du rail et comprenant un orifice traversé par un doigt. Ce doigt s'étend généralement entre les deux parois de guidage, perpendiculairement ou sensiblement perpendiculairement à celles-ci. Cet agencement permet maintenir la goulotte par rapport à l'élément structurel en bloquant toute translation de la goulotte à l'élément structurel suivant la direction de guidage.

Avantageusement, l'élément structurel peut être une traverse d'un véhicule automobile, notamment une traverse de support de colonne de direction.

L'invention concerne enfin un véhicule automobile comprenant un assemblage selon l'invention.

L'invention est maintenant décrite en référence aux dessins annexés, non limitatifs, dans lesquels :
[Fig. 1] La figure 1 représente une vue en perspective d'une goulotte selon un mode de réalisation.
[Fig. 2] La figure 2 représente une vue en perspective partielle d'un exemple de traverse de véhicule automobile.
[Fig. 3] La figure 3 représente partiellement en perspective un assemblage de la goulotte de la figure 1 à la traverse de la figure 2.
[Fig. 4] La figure 4 est une vue similaire à la figure 3, avant montage de la goulotte, la goulotte étant dans une position ne permettant pas un mauvais montage.
[Fig. 5] La figure 5 est une vue similaire à la figure 3, avant montage de la goulotte, la goulotte étant dans une position permettant un montage.

Dans la présente description, les termes avant, arrière, supérieur, inférieur, font référence aux directions avant et arrière du véhicule, lorsque la goulotte et l'élément structurel sont montés sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus ±20°, voire d'au plus ±10° ou d'au plus ±5°, avec une direction/un plan horizontal, longitudinal ou vertical.

Par sensiblement parallèle, perpendiculaire ou à angle droit, on entend une direction/un plan s'écartant d'au plus ±20°, voire d'au plus ±10° ou d'au plus ±5° d'une direction/d'un plan parallèle, perpendiculaire ou d'un angle droit.

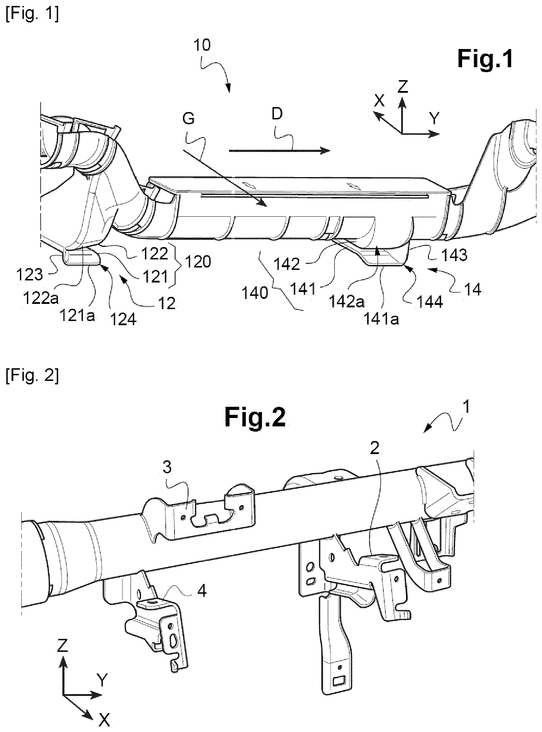

La figure 1 représente une goulotte 10 pour le passage de câble(s). Cette goulotte 10 s'étend suivant une direction longitudinale D, ici sensiblement parallèle à la direction transversale du véhicule lorsque que la goulotte est montée sur ce dernier via un élément structurel 1 du type de celui représenté dans l'exemple.

La figure 2 représente un élément structurel 1 d'un véhicule automobile, ici une traverse s'étendant suivant la direction transversale du véhicule. Dans l'exemple, cette traverse est une traverse de support de colonne de direction. Bien entendu, l'invention n'est pas limitée à un élément structurel particulier, ni à un positionnement particulier de ce dernier, mais peut-être appliquée à tout élément structurel auquel doit être fixée une goulotte de passage de câble, quel que soit son positionnement à l'intérieur du véhicule.

La goulotte 10 est pourvue de deux interfaces de fixation 12,14. Chaque interface de fixation présente un rail de guidage 120, 140 s'étendant suivant une direction de guidage G. Chaque rail de guidage 120, 140 est défini par deux parois de guidage en vis-à-vis 121, 122 et 141, 142, parallèles et reliés entre elles, ici par une paroi verticale 123, 143 fermant le rail latéralement. Dans l'exemple représenté, chaque rail de guidage 120, 140 présente ainsi une section transversale (perpendiculaire à la direction de guidage) en forme de U couché, dont l'ouverture est dirigée vers l'autre rail de guidage, tel que visible figure 1. Ceci permet de maintenir la goulotte suivant une direction perpendiculaire à la direction de guidage G lorsque des éléments de guidage sont insérés dans la goulotte tel que décrit plus loin.

Selon l'invention, chaque rail de guidage 120, 140 présente une extrémité élargie 124, 144, au niveau de laquelle une partie d'extrémité 121a, 122a, 141a, 142a d'une ou des deux parois de guidage s'écarte de l'autre paroi de guidage vers l'extérieur du rail de guidage suivant la direction de guidage G. Cette extrémité élargie 124, 144 est destinée à recevoir un élément de guidage suivant la direction de guidage lorsque la goulotte est approchée de la traverse 1 à laquelle elle doit être fixée. Dans l'exemple, la direction de guidage G est sensiblement perpendiculaire à la direction longitudinale D de la goulotte, autrement dit sensiblement parallèle à la direction longitudinale X du véhicule, la traverse s'étendant suivant la direction transversale.

Dans l'exemple représenté, les parois d'extrémité 121a, 122a et 141a, 142a des deux parois de guidage de chaque rail de guidage s'écartent l'une de l'autre au niveau des extrémités élargies 124, 144. Tel que visible plus précisément sur les figures 3 à 5, l'une des parois de guidage, ici la paroi inférieure 121, 141 de chaque rail de guidage, présente une partie d'extrémité 121a, 141a évasée plane, alors que l'autre paroi de guidage 122, 142, formant une paroi supérieure du rail de guidage, présente une partie d'extrémité 122a, 142a incurvée dont la convexité est dirigée vers la partie d'extrémité de la paroi inférieure. Ceci permet d'intégrer plus facilement la paroi supérieure à la goulotte tel que représenté dans l'exemple, cette paroi supérieure pouvant faire partie de la goulotte, autrement dit pouvant délimiter le volume intérieur de la goulotte.

Un assemblage 20 de la traverse 1 à la goulotte 10 est représenté figure 3. Tel que représenté figure 2, la traverse 1 comprend notamment un organe 3, ici un organe de fixation pour un autre élément du véhicule, et deux éléments de guidage 2, 4 conformés pour coopérer avec les rails de guidage 12, 14 respectivement. Ces éléments de guidage se présentent ainsi sous la forme de plaques planes dont l'épaisseur est inférieure ou égale à la distance séparant les deux parois parallèles de chaque rail. Autrement dit, dans l'assemblage, les faces opposées de chaque élément de guidage sont en appui contre les faces en regard des deux parois définissant un rail de guidage.

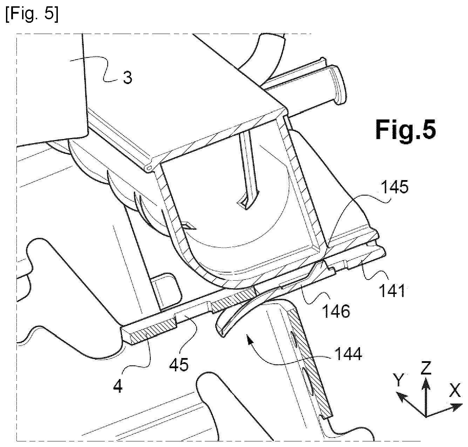

Dans cet assemblage, la goulotte 10 est positionnée le long de la traverse et de l'organe 3 solidaire de la traverse. Tel que représenté figure 3, chacun des éléments de guidage 2, 4 de la traverse est inséré à l'intérieur d'un rail de guidage 12, 14 respectivement suivant la direction de guidage G. En outre, la dimension la plus grande de la goulotte 10 (notée « a » sur la figure 4), mesurée au niveau de l'extrémité élargie 124 du rail de guidage suivant une direction perpendiculaire aux parois de guidage, est supérieure à une distance (notée « b » sur la figure 4) séparant l'élément de guidage 2 de l'organe 3 dans la même direction. Ainsi, tel que représenté figure 4, si la goulotte 10 est approchée de la traverse suivant la direction de guidage G, mais est trop haute par rapport aux éléments de guidage 2, 4, elle vient buter contre l'organe 3 et ne peut pas passer entre les éléments de guidage 2, 4 et l'organe 3, de sorte qu'un montage de la goulotte avec un mauvais positionnement par rapport à la traverse est impossible. La seule position de montage possible est celle représentée figure 5 dans laquelle chaque élément de guidage 2, 4 est inséré à l'intérieur du rail de guidage 12, 14 correspondant via l'extrémité élargie 124, 144 de ce dernier, la goulotte étant alors correctement positionnée et pouvant être avancée suivant la direction de guidage G jusqu'à la traverse 1 dans la position assemblée de la figure 3. On comprend ainsi que la forme évasée des extrémités des rails de guidage de la goulotte permet un bon positionnement, même en aveugle, de cette dernière sur les éléments de guidages 2, 4 solidaires de la traverse.

On notera que la dimension de la goulotte 10 de la paroi supérieure de guidage 122 à la paroi opposée 15 de la goulotte, notée « a' » sur la figure 4, est inférieure à la distance b susmentionnée, de manière à permettre le positionnement de la goulotte par rapport à la traverse tel que représentée figure 3.

Afin de maintenir la goulotte 10 en position par rapport à la traverse 1, on pourra prévoir sur au moins une des parois de guidage, dans une partie distincte de sa partie d'extrémité, un élément d'emboîtement choisi parmi un orifice et un doigt saillant en direction de l'autre paroi de guidage. Dans l'exemple représenté, la paroi inférieure 121, 141 de chaque rail de guidage est pourvue d'un doigt 145 faisant saillie en direction de l'autre paroi de guidage du rail et qui vient traverser un orifice 45 prévu à cet effet dans l'élément de guidage inséré à l'intérieur du rail (ces éléments ne sont représentés que pour le rail 14 et l'élément de guidage 4 sur les figures, mais existent de manière similaire pour le rail 12 et l'élément de guidage 2). Ce doigt 145 est incliné vers la paroi opposée de l'extrémité élargie du rail vers l'autre extrémité du rail pour faciliter l'insertion de l'élément de guidage à l'intérieur du rail de la goulotte jusqu'à ce que le doigt soit en position pour traverser l'orifice 45 de l'élément de guidage 4. Tel que visible figure 5, ce doigt 145 est situé à l'extrémité d'une languette 146 reliée à la paroi 141 par son extrémité opposée au doigt procurant ainsi une certaine flexibilité à cette languette et au doigt. Ceci facilite l'écartement du doigt lors de l'insertion de l'élément de guidage 4 à l'intérieur du rail jusqu'à ce que le doigt puisse traverser l'orifice 45 de l'élément de guidage 4. L'invention n'est toutefois pas limitée à ce mode de réalisation.

Dans l'exemple représenté, les rails de guidage 12, 14 sont positionnés sous la goulotte 10 lorsque celle-ci est montée sur la traverse, l'invention n'est toutefois pas limitée à un positionnement particulier des rails par rapport à la goulotte. Notamment, ces rails pourraient être situés au-dessus de la goulotte ou sur une face latérale.

L'invention n'est pas limitée non plus par le nombre de rails ni par la forme des rails. On pourra notamment prévoir un unique rail, par exemple présentant une section transversale fermée, ou plus de deux rails.

## Revendications

1. Assemblage (20) d'un élément structurel (1) d'un véhicule automobile et d'une goulotte (10),
dans lequel la goulotte (10) de passage de câble s'étend suivant une direction longitudinale et est pourvue d'au moins une interface de fixation (12, 14), chaque interface de fixation (12, 14) présentant un rail de guidage (120, 140) s'étendant suivant une direction de guidage, ce rail de guidage étant défini par deux parois de guidage (121, 122 ; 141, 142) en vis-à-vis parallèles et reliées entre elles, le rail de guidage (120, 140) présentant une extrémité élargie (124, 144) au niveau de laquelle une partie d'extrémité (121a, 122a ; 141a, 142a) d'au moins une des parois de guidage s'écarte de l'autre paroi de guidage vers l'extérieur du rail de guidage suivant la direction de guidage,
**caractérisé en ce que** :
- la goulotte (10) est positionnée le long de l'élément structurel (1) et d'un organe (3) solidaire de l'élément structurel, un élément de guidage (2, 4) solidaire de l'élément structurel étant inséré à l'intérieur du rail de guidage de chaque interface de fixation suivant la direction de guidage, la goulotte passant entre l'élément de guidage (2, 4) et l'organe (3), et
- la dimension la plus grande de la goulotte (10), mesurée au niveau de l'extrémité élargie (124, 144) du rail de guidage suivant une direction perpendiculaire aux parois de guidage, est supérieure à une distance séparant l'élément de guidage dudit organe dans la même direction.

2. Assemblage (20) d'un élément structurel (1) et d'une goulotte (10) selon la revendication 1, **caractérisé en ce qu'**au niveau de l'extrémité élargie (124, 144) du rail de guidage, les deux parois de guidage s'écartent l'une de l'autre.

3. Assemblage (20) d'un élément structurel (1) et d'une goulotte (10) selon la revendication 1 ou 2, **caractérisé en ce qu'**au niveau de l'extrémité élargie (124, 144) du rail de guidage, la partie d'extrémité de l'au moins une paroi de guidage est plane ou incurvée.

4. Assemblage (20) d'un élément structurel (1) et d'une goulotte (10) selon l'une quelconque des revendications 1 à 3, **caractérisé en ce que** l'une des parois de guidage (122, 142) forme une paroi de la goulotte.

5. Assemblage (20) d'un élément structurel (1) et d'une goulotte (10) selon l'une quelconque des revendications 1 à 4, **caractérisé en ce qu'**au moins une des parois de guidage est pourvue, dans une partie distincte d'une partie d'extrémité, d'un élément d'emboîtement (145) choisi parmi un orifice et un doigt saillant en direction de l'autre paroi de guidage.

6. Assemblage (20) d'un élément structurel (1) et d'une goulotte (10) selon l'une quelconque des revendications 1 à 5, **caractérisé en ce que** la direction de guidage est une direction transverse à la direction longitudinale de la goulotte.

7. Assemblage (20) selon l'une quelconque des revendications 1 à 6, dans lequel un élément d'emboîtement (45) de l'élément de guidage (4) coopère avec un élément d'emboîtement (145) dudit rail de guidage (14) recevant l'élément de guidage, ces éléments d'emboîtement étant situés à distance de l'extrémité élargie du rail et comprenant un orifice traversé par un doigt.

8. Assemblage (20) selon l'une quelconque des revendications 1 à 7, dans lequel l'élément structurel est une traverse d'un véhicule automobile, notamment une traverse de support de colonne de direction.

9. Véhicule automobile comprenant un assemblage (20) selon l'une quelconque des revendications 1 à 8.

## Patentansprüche

1. Anordnung (20) aus einem Strukturelement (1) eines Kraftfahrzeugs und einem Kanal (10), wobei sich der Kanal (10) zur Kabeldurchführung entlang einer Längsrichtung erstreckt und mit mindestens einer Befestigungsschnittstelle (12, 14) versehen ist, wobei jede Befestigungsschnittstelle (12, 14) eine Führungsschiene aufweist (120, 140), die sich entlang einer Führungsrichtung erstreckt, wobei diese Führungsschiene durch zwei gegenüber liegende, parallele und untereinander verbundene Führungswände (121, 122; 141, 142) definiert ist, wobei die Führungsschiene (120, 140) ein aufgeweitetes Ende (124, 144) aufweist, an dem sich ein Endteil (121a, 122a; 141a, 142a) mindestens einer der Führungswände von der anderen Führungswand entlang der Führungsrichtung nach außen hin entfernt, **dadurch gekennzeichnet, dass**:
- der Kanal (10) entlang des Strukturelements (1) und eines mit dem Strukturelement fest verbundenen Organs (3) positioniert ist, wobei ein mit dem Strukturelement fest verbundenes Führungselement (2, 4) in die Führungsschiene jeder Befestigungsschnittstelle entlang der Führungsrichtung eingefügt ist, wobei der Kanal zwischen dem Führungselement (2, 4) und dem Organ (3) verläuft, und
- die größte Abmessung des Kanals (10), gemessen an dem aufgeweiteten Ende (124, 144) der Führungsschiene entlang einer zu den Führungswänden senkrechten Richtung, größer als ein Abstand zwischen dem Führungselement und dem Organ in derselben Richtung ist.

2. Anordnung (20) aus einem Strukturelement (1) und einem Kanal (10) nach Anspruch 1, **dadurch gekennzeichnet, dass** sich an dem aufgeweiteten Ende (124, 144) der Führungsschiene die beiden Führungswände voneinander entfernen.

3. Anordnung (20) aus einem Strukturelement (1) und einem Kanal (10) nach Anspruch 1 oder 2, **dadurch gekennzeichnet, dass** an dem aufgeweiteten Ende (124, 144) der Führungsschiene der Endteil der mindestens einen Führungswand eben oder gekrümmt ist.

4. Anordnung (20) aus einem Strukturelement (1) und einem Kanal (10) nach einem der Ansprüche 1 bis 3, **dadurch gekennzeichnet, dass** eine der Führungswände (122, 142) eine Wand des Kanals bildet.

5. Anordnung (20) aus einem Strukturelement (1) und einem Kanal (10) nach einem der Ansprüche 1 bis 4, **dadurch gekennzeichnet, dass** mindestens eine der Führungswände in einem von dem Endteil verschiedenen Teil mit einem Steckelement (145) versehen ist, das aus einer Öffnung und einem in Richtung der anderen Führungswand abstehenden Finger gewählt ist.

6. Anordnung (20) aus einem Strukturelement (1) und einem Kanal (10) nach einem der Ansprüche 1 bis 5, **dadurch gekennzeichnet, dass** die Führungsrichtung eine quer zu der Längsrichtung des Kanals verlaufende Richtung ist.

7. Anordnung (20) nach einem der Ansprüche 1 bis 6, wobei ein Steckelement (45) des Führungselements (4) mit einem Steckelement (145) der Führungsschiene (14) zusammenwirkt, die das Führungselement aufnimmt, wobei diese Steckelemente in einem Abstand von dem aufgeweiteten Ende der Schiene gelegen sind und eine von einem Finger durchdrungene Öffnung umfassen.

8. Anordnung (20) nach einem der Ansprüche 1 bis 7, wobei das Strukturelement ein Querträger eines Kraftfahrzeugs ist, insbesondere ein Querträger zur Halterung einer Lenksäule.

9. Kraftfahrzeug, das eine Anordnung (20) nach einem der Ansprüche 1 bis 8 umfasst.

## Claims

1. Assembly (20) of a structural element (1) of a motor vehicle and a duct (10), wherein the cable passage duct (10) extends in a longitudinal direction and is provided with at least one fastening interface (12, 14), each fastening interface (12, 14) having a guide rail (120, 140) extending in a guiding direction, this guide rail being defined by two guide walls (121, 122; 141, 142) facing each other in parallel and connected to each other, the guide rail (120, 140) having a widened end (124, 144) at which an end portion (121a, 122a; 141a, 142a) of at least one of the guide walls diverges from the other guide wall towards the outside of the guide rail in the guiding direction,
**characterized in that**:
- the duct (10) is positioned along the structural element (1) and a member (3) secured to the structural element, a guide element (2, 4) secured to the structural element being inserted inside the guide rail of each fastening interface in the guiding direction, the duct passing between the guide element (2, 4) and the member (3), and
- the largest dimension of the duct (10), measured at the widened end (124, 144) of the guide rail in a direction perpendicular to the guide walls, is greater than a distance separating the guide element from said member in the same direction.

2. Assembly (20) of a structural element (1) and a duct (10) according to Claim 1, **characterized in that**, at the widened end (124, 144) of the guide rail, the two guide walls diverge from each other.

3. Assembly (20) of a structural element (1) and a duct (10) according to Claim 1 or 2, **characterized in that**, at the widened end (124, 144) of the guide rail, the end portion of the at least one guide wall is planar or curved.

4. Assembly (20) of a structural element (1) and a duct (10) according to any one of Claims 1 to 3, **characterized in that** one of the guide walls (122, 142) forms a wall of the duct.

5. Assembly (20) of a structural element (1) and a duct (10) according to any one of Claims 1 to 4, **characterized in that** at least one of the guide walls is provided, in a portion separate from an end portion, with a fitting element (145) chosen from an orifice and a finger projecting in the direction of the other guide wall.

6. Assembly (20) of a structural element (1) and a duct (10) according to any one of Claims 1 to 5, **characterized in that** the guiding direction is a direction transverse to the longitudinal direction of the duct.

7. Assembly (20) according to any one of Claims 1 to 6, wherein a fitting element (45) of the guide element (4) cooperates with a fitting element (145) of said guide rail (14) receiving the guide element, these fitting elements being located at a distance from the widened end of the rail and comprising an orifice through which a finger passes.

8. Assembly (20) according to any one of Claims 1 to 7, wherein the structural element is a crossmember of a motor vehicle, in particular a crossmember for supporting a steering column.

9. Motor vehicle comprising an assembly (20) according to any one of Claims 1 to 8.
